(19) Europäisches Patentamt
European Patent Office
Office européen des brevets

(11) EP 3 078 413 A1

(12) EUROPEAN PATENT APPLICATION

(43) Date of publication:
12.10.2016 Bulletin 2016/41

(21) Application number: 16162331.9

(22) Date of filing: 24.03.2016

(51) Int Cl.:
B01F 7/00 (2006.01)          B01F 7/28 (2006.01)
G01F 9/00 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.03.2015   JP 2015066522
23.03.2016   US 201615077943

(71) Applicant: Uniflex Co., Ltd.
Tokyo 113-0033 (JP)

(72) Inventor: HATTORI, Akira
Abiko-city, Chiba 2701154 (JP)

(74) Representative: Epping - Hermann - Fischer
Patentanwaltsgesellschaft mbH
Schloßschmidstraße 5
80639 München (DE)

(54) **MIXING CAPACITY MEASURING DEVICE**

(57)     A mixing capacity measuring device and method that measures mixing capacity of a mixing device comprising:

a first mixing tank (3) having a first mixing liquid;
the mixing device disposed in the first mixing tank, wherein the mixing device comprises a mixer body (7) having a cylindrical rotating member (21G) having a cylindrical housing, the mixer body is rotatable around a center axis line (L1) of the cylindrical housing via a rotating drive shaft (21E) connected to a top plate that encloses an upper end of the cylindrical housing, wherein
the cylindrical housing comprises a plurality of discharge ports (31A1) formed in a peripheral surface of the cylindrical housing and a plurality of fins (33A1) formed at an inner peripheral surface of the cylindrical housing so as to protrude inwardly, and
a suction port (32) formed at a lower end of the cylindrical housing, wherein
when the cylindrical rotating member rotates, a portion of the first mixing liquid in the first mixing tank is sucked through the suction port; and
a measuring unit disposed in the first mixing tank, wherein the measuring unit is configured to determine the mixing capacity of the mixing device.

When measuring the inner circulation flow f generated by suction port at the bottom end of cylindrical housing where it sucks liquid to be mixed, during a predetermined period of time, the transferred liquid volume can help to determine the mixing capacity of a mixer body. As a result, the mixing capacity of the mixer body can be quantified based on the measured transferred liquid. Through this quantification of mixing capacity, practical applications of the mixer can be designed.

Fig. 1

**Description**

CROSS-REFERENCE TO RELATED APPLICATIONS

This application claims priority to JP 2015-066522, filed on March 27, 2015, entitled "Mixing Capacity Measuring Device", and to US Patent Application Ser. No. 15/077,943, filed on March 23, 2016, which is a continuation-in-part of US Patent Application Ser. No. 14/138,157, filed on December 23, 2013, which claims priority to JP Patent Application No. 2012-280988, filed on December 25, 2012, the disclosures are herein incorporated by reference for all purposes.

TECHNICAL FIELD

The present disclosure relates to a mixing capacity measuring device or more particularly to a measuring device capable of quantifying and forecasting mixing capacity of a mixing device.

BACKGROUND

Unlike conventional mixing members which are often of a propeller type, a mixer has been proposed, as shown in Patent Document 1, in which a circular flow occurs at the inner portion of a cylindrical rotating member.
Unlike a propeller type mixing member, the mixing device having this configuration can mix the mixing target with a high degree of safety and efficiency.

PRIOR ART DOCUMENTS

(Patent Document)

Patent Document 1 - Unexamined Japanese Patent Application Publication No. 2014-124540.

SUMMARY

PROBLEMS TO BE SOLVED BY THE INVENTION

Techniques for measuring and calculating mixing capacity of conventional mixing devices, including those with propeller type mixing members, are complicated or unclear. Thus, it is difficult to quantify and predict the mixing capacity of a mixing device.
The present disclosure proposes a technique of which liquid transfer volume of a mixing device can be measured through an apparatus which can objectively verify processing time and the amount of energy required to efficiently manage mixing. This in turn produces data that allows one to forecast mixing efficiency, such as determining the exact amount of processing time and energy consumption needed for mixing a given volume of liquid.

MEANS FOR SOLVING THE PROBLEM

In order to solve the problem, the present disclosure provides a mixer body 7 or 21A that integrally rotates around the center axis line L1 of a cylindrical housing 31 via a rotating drive shaft 21E which is connected to a top plate 21G1 that encloses the upper end of the cylindrical housing 31. The cylindrical housing 31 has a plurality of discharge ports 31A1 - 31A4 formed in the peripheral surface of the cylindrical housing 31. A plurality of inwardly, projecting fins or extruded plate portions 33A1 - 33A4 are provided at the inner peripheral surface of the cylindrical housing 31. Provided at the bottom end of the cylindrical housing 31 is a suction port 32. When the cylindrical housing 31 is rotated, the fins 33A1 - 33A4 cause an inner circulation current f in which the liquid to be mixed 21C circulates around the center axis line L1. A portion of the liquid to be mixed 2, which forms the inner circulation current f, is discharged outwardly, as outer discharge current d1 - d4, by centrifugal force through discharge ports 31A1 - 31A4 formed in the cylindrical housing 31. At the same time, a portion of the liquid to be mixed 2 that is outside the mixer body 7 or 21A is sucked through the suction port 32 as suction flow e1 - e3. The mixer body 7 or 21A draws the liquid to be mixed 2 from the mixing tank 3, within a predetermined unit of time, and transfers the liquid to be mixed 2 to the mixing tank 5 through the suction port 32. The mixing capacity of the mixer body 7 or 21A can be determined by measuring the volume of liquid to be mixed 2 that was transferred to the mixing tank 5.

EFFECTS OF THE INVENTION

According to the present disclosure, liquid to be mixed is sucked or drawn, within a predetermined unit of time, from a first mixing tank and transferred to a second mixing tank via a suction port formed at the bottom of a cylindrical housing that creates an inner circulation flow. The mixing capacity of the mixer main body can then be quantified by measuring the volume of liquid to be mixed that is transferred to the second mixing tank. Using the mixing capacity quantification, various elements of the mixing device can be customized and designed to achieve the desired mixing performance accordingly.

BRIEF DESCRIPTION OF THE DRAWINGS

Fig. 1 shows an embodiment of the mixing capacity measuring device.
Fig. 2 is a schematic cross-sectional view illustrating an embodiment of a mixing device.
Fig. 3 is a perspective view illustrating a detailed configuration of a mixer body.
Fig. 4 is a plan view illustrating a detailed configuration of the cylindrical housing shown in Fig. 3.
Figs. 5a-5c show an embodiment of operation of the mixing capacity measuring device for measuring a mixing volume of the mixing device.
Figs. 6a-6c show perspective views of a transfer liquid volume measurement operation.
Fig. 7 shows a characteristic line graph showing the evaluation of the measurement results of the transferred volume of the liquid to be mixed.
Fig. 8 shows a chart illustrating the mixing efficiency of the mixing device.
Fig. 9 shows a perspective view of an embodiment of a measuring device for measuring lifting force of the mixing device.
Figs. 10A and 10B show perspective views of an embodiment of a procedure for measuring lifting force of the mixing device.
Fig. 11 shows a characteristic line graph illustrating the evaluation results of lifting force of the mixing device.
Fig. 12 shows a chart illustrating the relationship between lifting force and rotational speed of the mixing device.
Fig. 13 shows a chart illustrating the correlation between the suction port diameter, lifting force and rotational speed of the mixing device.
Fig. 14 shows a bar graph illustrating the correlation between the suction port diameter, lifting force and rotational speed of the mixing device.
Fig. 15 shows a chart illustrating the mixing efficiency of various mixing devices.
Fig. 16 shows a bar graph illustrating the mixing efficiency of various mixing devices.
Fig. 17 shows a characteristic line graph illustrating the relationship between the mixing transfer volume and the suction port diameter of the mixing device.

DETAILED DESCRIPTION

A first embodiment of the present disclosure will now be described with reference to the drawings.

(1) Configuration of the Mixing Capacity Measuring Device

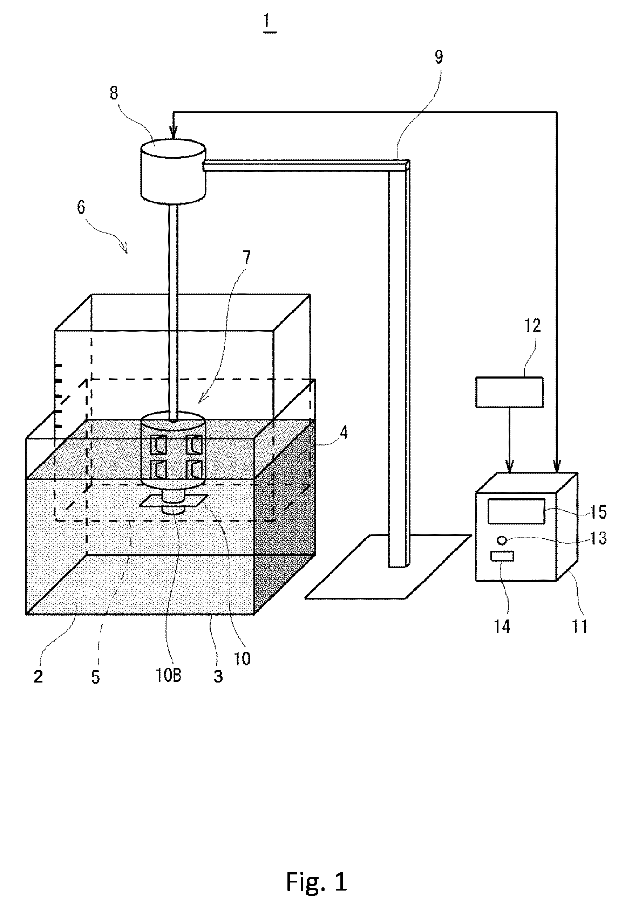

Fig. 1 shows an example setup of the mixing capacity measuring device 1. The target to be mixed is a first liquid to be mixed 2 that is contained in a first mixing tank 3. A second mixing tank 5 containing a second liquid to be mixed is disposed at an upper portion of the first mixing tank 3. The second liquid to be mixed 4 contained in the second mixing tank 5 is measured when mixer main body 7 of the mixer 6 is rotated by a drive motor 8.

When the mixer main body 7 is rotated by the drive motor 8 that is supported by the drive motor supporting unit 9, the first liquid to be mixed 2 in the first mixing tank 3 is drawn through a suction tube 10B so as to be deposited into the second mixing tank 5. As shown, the suction tube 10B passes through a sealing member 10 which is formed at the bottom surface of the second mixing tank 5.

An operator carrying out the measurement inputs a set of measurement conditions 12 via the measurement control unit 11 so that the drive motor 8 drives the mixing device in accordance with the set of measurement conditions.

The measurement control unit 11, from the time the operator carrying out the measurement activates the start switch 13 to the time the operator carrying out the measurement turns the stop switch 14 off, activates the drive motor 8 so as to drive the mixer body 7 to rotate at the rotational speed (revolutions per minute, rpm) as displayed on the display window 15.

(2) Exemplary Operation of the Mixing Device

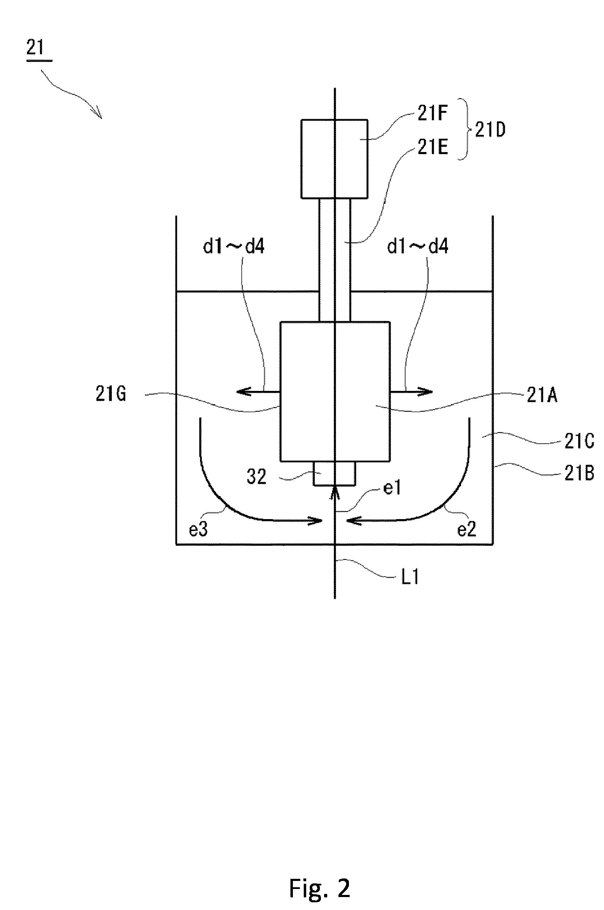

As an example, the mixer body 7 having the configuration of a mixer body 21A of the mixing device 21 as shown in Fig. 2 is used or serves as the target for measuring its mixing capacity.

As shown, the mixing device 21 has a configuration in which the mixer body 21A having a cylindrical shape, is inserted vertically from the top of the quadrate-shaped mixing tank 21B into the liquid to be mixed 21C contained in the mixing tank.

The mixer body 21A extends vertically from a rotation drive portion 21D and is attached to a lower end of a rotating drive shaft 21E. The rotating drive shaft 21E extends vertically and is driven by drive motor 21F around a center axis line L1. The mixer body is rotatable around the center axis line L1.

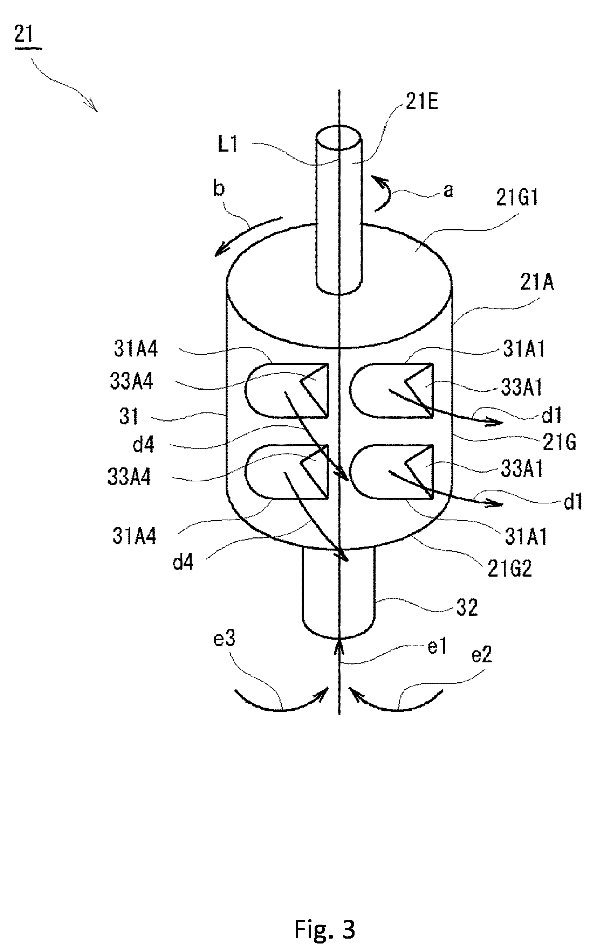

The exemplary explanation below refers to the situation where the mixer body is rotated in an anti-clockwise direction. It is understood that the explanation below also applies to the situation where the mixer body is rotated in a clockwise direction. As shown in Fig. 3, the mixer body 21A has a cylindrical rotation member 21G in which the upper and lower surfaces of the cylindrical rotating member 21G are covered by respective top plate 21G1 and bottom plate 21G2. As shown by arrow a, when the rotation drive shaft 21E, the lower end of which is integrally fixed to the top plate 21G1, is rotated counter-clockwise, the cylindrical rotating member 21G rotates counter-clockwise as shown by arrow b.

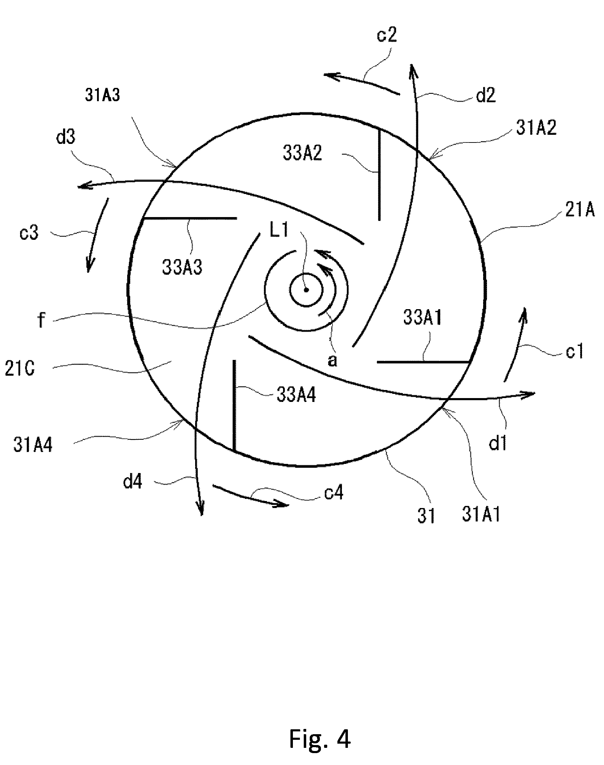

The rotating member 21G, to which the upper surface and lower surface of the respective top plate 21G1 and bottom plate 21 G2 are attached, has a cylindrical housing 31 made of a thin sheet of metal (or other suitable material including resin, etc.). At the outer surface of the cylindrical housing 31, as shown in Fig. 3 and Fig. 4, 4 discharge ports 31A1 - 31A4 are shown to be disposed at 90 degree angles around the center of the center axis line L1. At the same time, a suction tube 32, which communicates with the cylindrical housing 31 and has the function of being a suction port, protrudes downward from the center of the bottom plate 21G2.

For simplicity and illustration purpose, the discharge ports 31A1 - 31A4 shown are arranged such that they are formed vertically at intermediate positions in two levels in the cylindrical housing 31. As an example, there may be 8 or 12 discharge ports formed in the cylindrical outer peripheral surface of the cylindrical rotating member 21 G at 90 degree intervals. It is understood that other suitable number of discharge ports arranged in other suitable number of levels can be formed in the cylindrical housing.

At the end edges of the discharge ports 31A1, 31A2, 31A3 and 31A4 of the cylindrical housing 31 at the rotation direction shown by arrow b, extruded plate portions 33A1, 33A2, 33A3 and 33A4 are formed in the direction toward the central axis line L1 side. Accordingly, when the cylindrical housing 31 containing the liquid to be mixed 21C is rotated in the rotation direction b, the liquid to be mixed 21C is forced out by the extruded plate portions 33A1, 33A2, 33A3 and 33A4 through discharge ports 31A1, 31A2, 31A3 and 31A4 to which said extruded plate portions 33A1, 33A2, 33A3 and 33A4 are adjacent thereto.

Thus, in order to mix the liquid to be mixed 21C, the surfaces of the extruded plate portions 33A1 - 33A4 push the liquid to be mixed 21C so as to be transferred by the extruded plate portions (which can also be referred to as fins).

According to the configurations shown in Figs. 2 - 4, when the mixer body 21A has been inserted into the liquid to be mixed 21C and rotated by the rotation drive portion 21D in the direction of arrow a, the space between the fin or extruded plate portion 33A1 of the discharge port 31A1 and the fin or extruded plate portion 33A2 of discharge port 31A2, the space between the fin or extruded plate portion 33A2 of the discharge port 31A2 and the fin or extruded plate portion 33A3 of discharge port 31A3, the space between the fin or extruded plate portion 33A3 of the discharge port 31A3 and the fin or extruded plate portion 33A4 of discharge port 31A4, and the space between the fin or extruded plate portion 33A4 of the discharge port 31A4 and the fin or extruded plate portion 33A1 of discharge port 31A1 at the circumferential surface of the cylindrical housing 31, moves in the same direction as arrow a as is illustrated by arrows c1, c2, c3 and c4.

At this time, as the above mentioned portions each moves in the direction of c1, c2, c3 and c4, a portion of the liquid to be mixed 21C inside the cylindrical housing 31 comes in contact with the center portion of the cylindrical housing 31 and is drawn along by the movement.

Thus, the extruded plate portions or fins 33A1 - 33A4, as a whole, serve to transfer the liquid to be mixed 21C. After the cylindrical rotation member 21G starts rotating and a stable rotation state is attained, the rotation operation draws along the liquid to be mixed 21C at the extruded plate portions or fins 33A1 - 33A4. The rotation speed of the liquid to be mixed 21C around the center axis line L1 is the same rotation speed as the rotation drive shaft 21E (this is called inner circulation current f).

The outer side of the liquid to be mixed 21C, that forms the inner circulation current f, is drawn along by the rotation. The liquid to be mixed 21C centered around the central axis line L1 is dispersed outward by a centrifugal force.

In due course, a portion of the inner circulation current f of the liquid to be mixed 21C that has been acted upon by centrifugal force, is discharged, as shown by arrows d1 - d4 in Fig. 4, as an outer discharge current from discharge ports 31A1 - 31A4 of the cylindrical housing 31 to the outer parts of the mixing tank 21B.

With this embodiment, when discharge ports 31A1 - 31A4 are punched in the outer circumference of the metal sheet portion of the cylindrical housing 31, plate members are positioned at the outer circumferential edge of the discharge ports 31A1 - 31A4 forming a gap. These plate members are folded inward after machining to form the extruded plate portions or fins 33A1 - 33A4.

In such case, if the fold angle relative to the inner side surface of the cylindrical housing 31 is, for example, 45 degrees and if the cylindrical housing 31 is rotated, the extruded plate portions 33A1 - 33A4 push the liquid to be mixed 21C in direction of the center axis line L1. In this way, the inner circulation current f forming operation can be easily carried out by the extruded plate portions 33A1 - 33A4.

At this time, as shown in Fig. 3, the liquid to be mixed 21C that is inside the mixing tank 21B, and the liquid to be mixed 21C around the suction tube 32 which serves as a suction port, are drawn there-through as illustrated by arrow e1 into the cylindrical housing 31 as suction current. Accordingly, as shown by arrows e2 and e3, liquid to be mixed 21C that is near the bottom plate 21G2 of the mixing tank 21B is gathered at the lower end of the suction tube 32 and drawn there-though as suction current e1.

At the time of this flow of the liquid to be mixed 21C that is inside the cylindrical housing 31, the outer discharge current d1 - d4 is discharged (as a horizontal discharge current) from the discharge ports 31A1 - 31A4 at the same time that suction current e1 - e3 occurs from the suction tube 32. As a result, the liquid to be mixed 21C that is drawn into the suction tube 32 (against gravity) and after the inner circulation current f (cyclonic current) centers around the center axis line L1 of the cylindrical housing 31, a portion of the inner circulation current f is discharged outward as an outer discharge current d1 - d4 to become a mixing current of the liquid to be mixed 21C.

Based on the configurations of the mixing device 21 as shown in Figs. 2-4, the rotation of the cylindrical housing 31 of the mixer body 21A causes the occurrence of inner circulation current f therein. At the same time, a portion of the liquid to be mixed 21C is radially dispersed to the outside as an outer discharge current d1 - d4 by centrifugal force. In addition, the presence of negative pressure in the mixer body is used to draw liquid to be mixed from the mixing tank into the mixer body and around the cylindrical housing 31, as indicated by the suction current e1 - e3. The cylindrical housing 31 stirs and mixes the liquid to be mixed 21C contained in the mixing tank 21B. This produces a homogenized and uniform mixing in the mixing tank.

(3) Mixing Capacity Measurement

(3-1) Exemplary Operation of Measuring Device

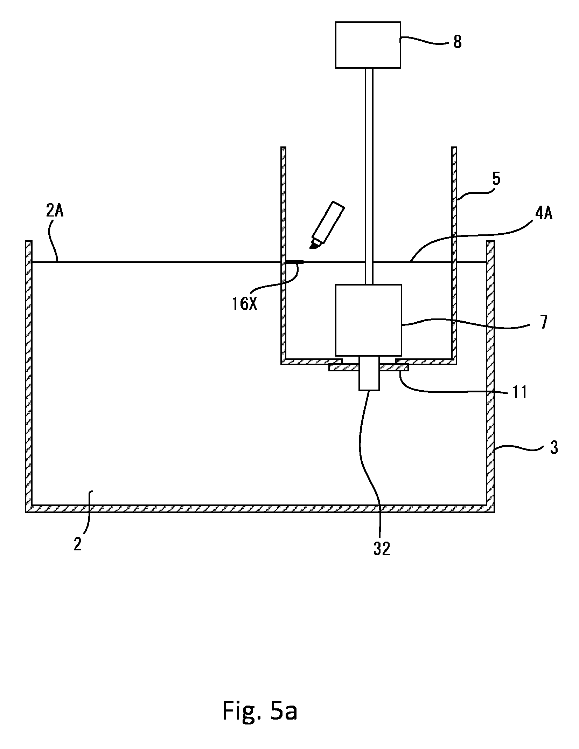

Figs. 5a-5c show an exemplary operation of the mixing capacity measuring device. The mixer body 7, the rotational speed (in the unit of rpm) of which is to be measured, is disposed in the second mixing tank 5. The suction tube 32 passes through the bottom surface of the second mixing tank 5 so as to be in communication with the first mixing tank 3. The suction tube is arranged in such a manner that first mixing liquid 2 in the first mixing tank 3 can be sucked there-through so as to be transferred into and trapped in the second mixing tank 5 as second mixing liquid 4. The volume of the second mixing liquid 4 is determined based on measurement gradients or marking points 16 as appeared on the surface of the second mixing tank which is recorded by the operator.

(3-1-1) Measurement Process

Before carrying out the measurement, the operator makes sure that there is sufficient water level, such as water levels 2A and 4A, in both the first liquid mixing tank 3 and second liquid mixing tank 5 to allow the mixer body 7 to operate as shown in Fig. 5a.

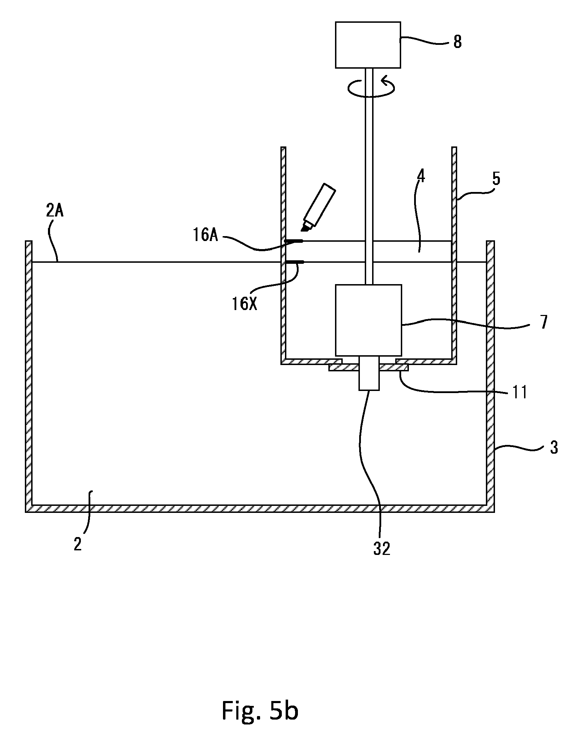

The operator sets the measurement conditions 12, as shown in Fig. 1, such as rpm of the mixer body 7 that one wants to measure (for example, 500 rpm, 1000 rpm, 1,500 rpm, 2,000 rpm). Other suitable rotational speeds may also be used. At the time of turning on the start switch 13, the operator activates the stop watch for a predetermined period of time (for example, 10 seconds). Meanwhile, the rpm of the mixer body 7 is confirmed based on numerical digit which appears on the display window 15. The operator then turns off the mixing stop switch 14 when the allotted measurement time has been reached and records the water level reached by making markings on the surface of the second mixing liquid tank 5 as shown in Fig. 5b.

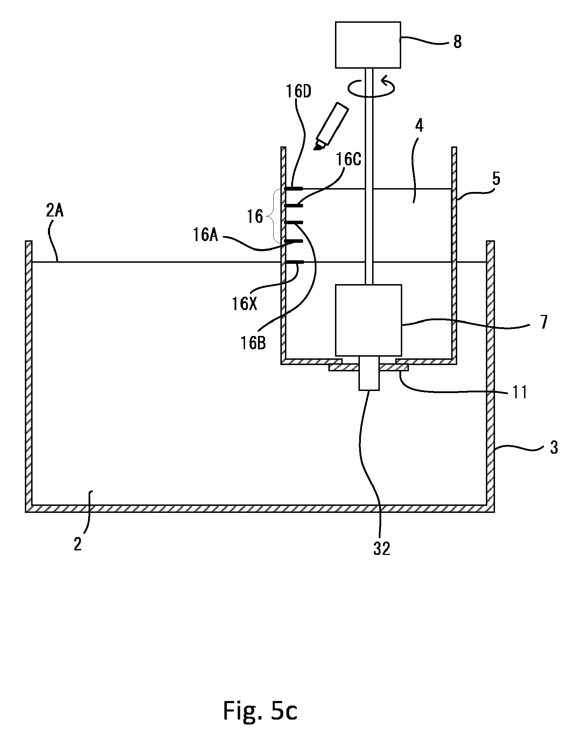

The operator repeats the same procedure above for each rpm speed of the mixer body to be measured. Each time, the amount of first mixing liquid 2 drawn up through suction tube 32 as second mixing liquid 4 and transferred into the second mixing tank 5 can be noted by making a marking on the second mixing tank based on the water level reached by the second mixing liquid 4 as shown in Fig. 5c.

For example, the operator makes a marking of the initial water level on the second mixing tank. The label 16X refers to the initial water level 4A contained in the second mixing tank prior to operating the mixer body 7 as shown in Fig. 5a. For each rotational speed, the operator makes a marking of the final water level (for example, labeled as 16A - 16D shown in Figs. 5b-5c) on the surface of the second mixing tank after the allotted measurement time has been reached. The difference between the final water level and the initial water level correlates to the volume of the second mixing liquid 4 that is drawn by the mixer body based on the specific rotational speed at the allotted measurement time.

Thus, the final water level which correlates to the second mixing liquid 4 which is drawn from the first mixing liquid into the second mixing liquid tank 5 after the mixer body 7 is rotated at each speed of 500 rpm, 1,000 rpm 1,500 rpm and 2,000 rpm is recorded and labeled as 16A, 16B, 16C and 16D respectively. The liquid contained in the second mixing tank may be poured back into the first mixing tank.

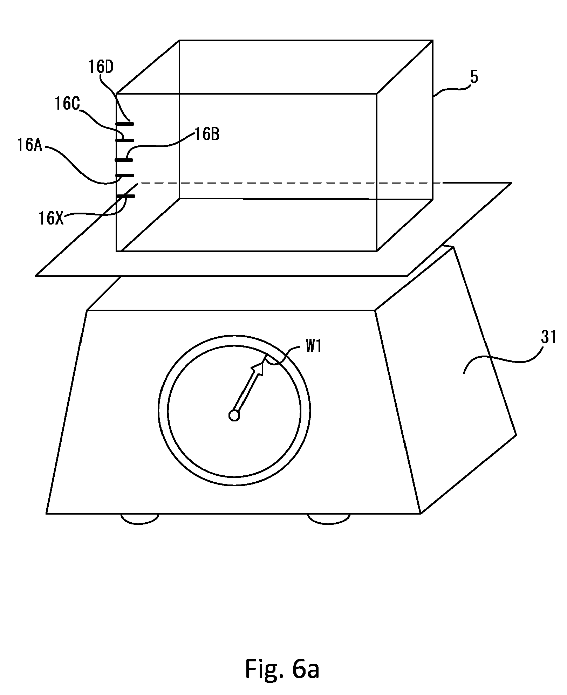

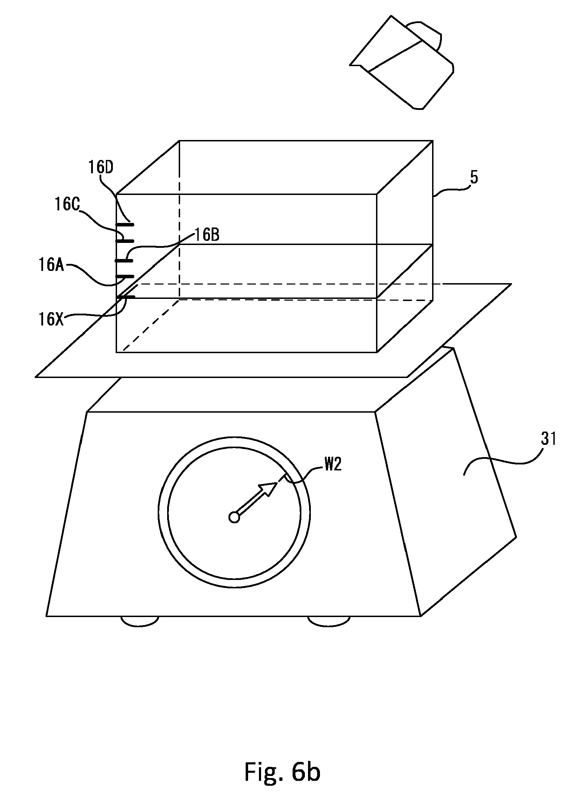

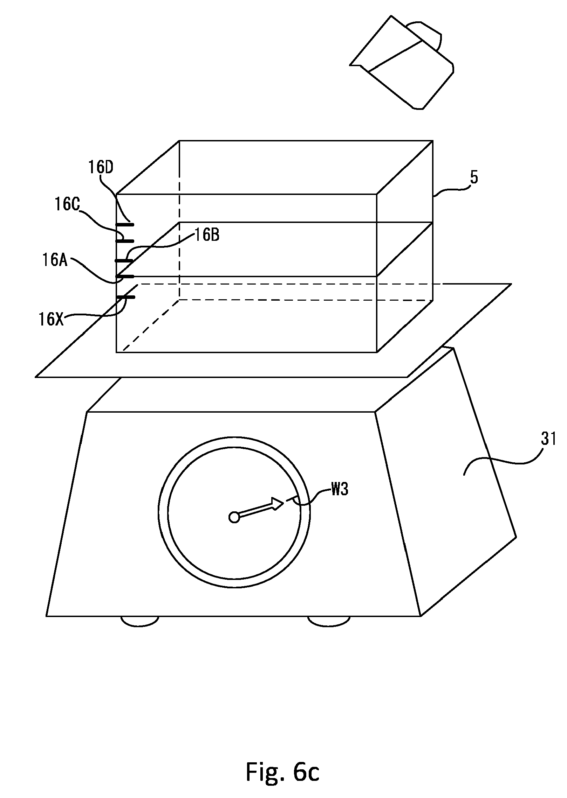

Subsequently, the operator prepares a weighing balance 31 as shown in Fig. 6a. Thereafter, the second mixing tank with the markings or labels of initial water level and final water level is placed on the weighing balance. The weight of the second mixing tank is measured and is recorded as W1. Liquid to be mixed in the first mixing tank is poured into the second mixing tank 5 which is placed on the weighing balance until the liquid to be mixed reaches the marking of initial water level 16X. The weight of the second mixing tank filled with liquid to be mixed up to initial water level 16X is measured and is recorded as W2 as shown in Fig. 6b. Afterwards, the operator continues to transfer liquid to be mixed from the first mixing tank into the second mixing tank until it reaches the marking of final water level 16 (for example, 16A, 16B, 16C or 16D) based on various rotational speeds. The weight of the second mixing tank filled with liquid to be mixed up to the final water level 16 is measured and is recorded as W3. As an example, the weight of the second mixing tank with liquid to be mixed up to the final water level 16A based on the first rotational speed (for example, 500 rpm) is measured and is recorded as W3 as illustrated in Fig. 6c.

The difference between W3 and W2 corresponds to the weight of the first liquid to be mixed 2 transferred to the second mixing tank as second mixing liquid at the respective rpm speed at the allotted time. In this way, the weighing data (obtained by the weighing balance 31) of the first mixing liquid 2 transferred into the second mixing tank 5 as second mixing liquid 4 at each rpm speed of the mixer body 7 is obtained as a quantification of mixing capacity information of the mixer body.

(3-1-2) Evaluation of Measurement Results

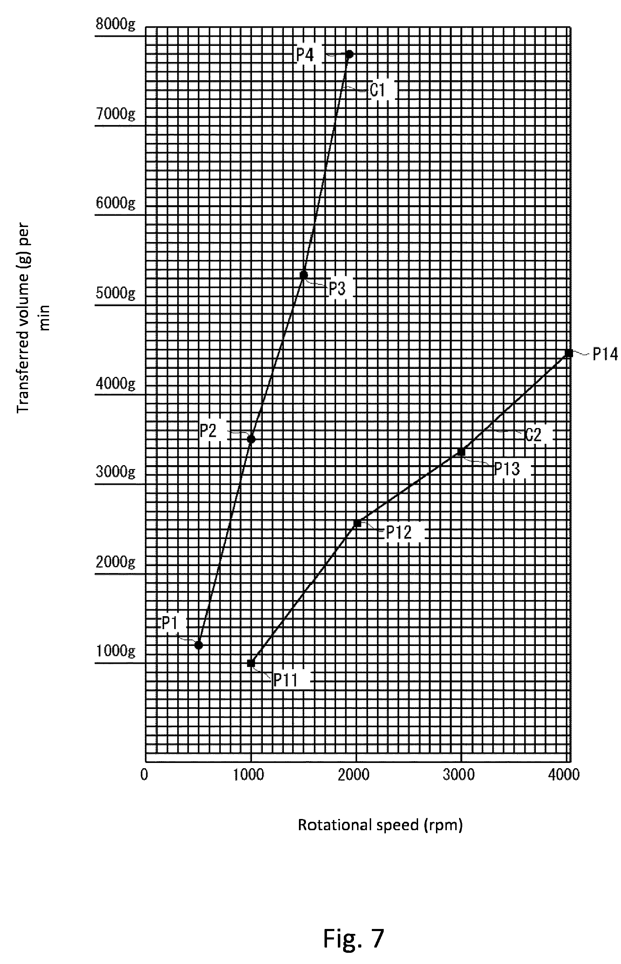

The mixer body 7 to be measured (as shown in Figs. 5a-5c) includes similar configuration as the mixing body 21A having cylindrical housing 31 (as shown in Figs. 2-4). The cylindrical housing 31 of the mixing body 21A having a diameter of about 50 mm, for example, is rotated at 500 rpm, 1,000 rpm, 1,500 rpm and 1,930 rpm. After the mixer body is rotated at the speed for a predetermined time, the amount or volume of the second mixing liquid 4 in the second mixing tank 5 which is transferred from the first mixing tank by the mixer body is weighed on the weighing balance 31 and the weight values of which are presented in Fig. 7 as measurement points. Measurement points P1, P2, P3 and P4, as shown, correspond to 1,200 g at the speed of 500 rpm, 3,490 g at the speed of 1,000 rpm, 5,330 g at the speed of 1,500 rpm and 7,790 g at the speed of 1,930 rpm, respectively.

As described, the measurement results are shown in Fig. 7. The horizontal axis represents the rotation speed (in the unit of rpm) while the vertical axis represents the weight of the second mixing liquid (in the unit of g/min). When measurement points P1, P2, P3 and P4 are plotted, a characteristic curve C1 that is a substantially straight line is formed. C1, for example, is represented by a linear equation of $Y=aX+b$, where constant b is virtually 0 (b = 0) and thus $Y=aX$.

Based on the measurement results using the mixing capacity measuring device 1, the start-up performance attained by the mixing body 7 which is substantially the same as the mixer body 21A is shown to be very high. For instance, when the mixer body 21A starts up from 0 rpm, start-up lag time (in other words a delay in start-up time) is negligible demonstrating a very high start-up performance.

(3-1-3)

As described above, the characteristic curve C1 relates to measurement results of the mixer body 7 having the cylindrical housing 31 with diameter of 50 mm. Characteristic curve C2 in Fig. 7 shows the measurement results of a cylindrical housing 31 having diameter of 25 mm. The measurement points P11, P12, P13 and P14 of characteristic curve C2, as shown, correspond to 990 g at the speed of 1,000 rpm, 2,580 g at the speed of 2,000 rpm, 3,350 g at the speed of 3,000 rpm and 4,550g at the speed of 4,000 rpm, respectively.

In this case, the mixer body 21A also shows a rapid start-up with delay being nearly negligible demonstrating good start-up performance.

In addition, even in the case where the diameters of the mixer body 21A are changed, the gradient or slope of the characteristic curves C1 and C2 is substantially linear. We have found that the relationship between the rotation speed (rpm) of the mixer body 21A and the transferred liquid volume (g/min) by the mixer body can be quantified. As a result, we have discovered that through the actual measurement of the transferred liquid volume, various parts of or the design of the mixer body that caused the mixing liquid to be transferred, can be objectively and predictively forecast.

(3-2) Measuring Mixing Efficiency

(3-2-1)

As described with reference to Figs. 2-4, the cylindrical housing 31 of the mixing body 21A of the mixing device 21, has fins formed inwardly as extruded plate portions 33A1 - 33A4 that exert mixing energy to the liquid to be mixed 21C so as to transfer the liquid to be mixed 21C. In this way, the mixing liquid 21C inside the liquid mixing tank 21B is given a mixing effect.

Concerning the mixing device 21, because measurement of the volume of mixing liquid transferred can be carried out, the mixing efficiency (called actual mixing efficiency percentage) of the mixing device 21 may be presented by the following equation.

Equation 1:

$$\text{Actual efficiency percentage (E \%)} = \frac{\text{measured volume of liquid transferred}}{\text{total transfer volume of fins}} \quad \dots (1)$$

In the case of the mixer body 21A shown Figs. 2 - 4, fins or the extruded plate portions 33A1-33A4 are provided as mechanism for mixing the mixing liquid by the mixer body 21A. Based on equation 1 above, desired fins' total transfer volume can be planned and configured, based on the measured volume of the mixing device 21 such that a high mixing efficiency can be obtained.

(1) Equation to determine the total transfer volume of fins is presented as follows:
Equation 2

$$\text{Total transfer volume of fins} = A \times N \times f \times \pi \times D \quad \dots (2)$$

where

A: Surface area of a fin
N: Number of fins
f: frequency in revolution per second (rps) = $\pi$ x inner diameter of the mixer body x rpm/60
D: Diameter of the mixer body

Based on the above equation, the total transfer volume of the fins can be calculated.

$\pi$Df in equation 2 may be expressed as equation 3 as follows:
Equation 3

$$\pi D f = V \quad \dots (3)$$

where
V: velocity of mixer body in seconds.

In this way, the speed of the mixer body 21A in seconds is demonstrated. In other words, it is the speed of the circumference of the cylindrical housing 31 in seconds that is desired.

In particular, the above may be used to calculate flow rate of one fin as follows:
Equation 4

$$Q = AV \quad \dots (4)$$

where

Q: flow volume of one fin
A: fin surface area.

Thus, the flow volume Q of one fin which refers to mass or volume of the mixing liquid which passes a fin per unit time can be determined.
Equation 5

$$Qt = Q \times N \quad \dots (5)$$

where
Qt: Total mixing liquid transfer volume of N number of fins.

In this manner, the total mixing liquid transfer volume Qt of N number of fins which relates to the total volume or mass of liquid transferred by N number of fins per unit time of the mixing device 21 can be determined.
Equation 6

$$E\% = \frac{Qe}{Qt} \times 100 \quad \dots (6)$$

where

Qe: Measured volume of liquid transferred
Qt: Total volume of liquid transferred by N number of fins (calculated)
E%: Actual Efficiency %

Accordingly, the actual efficiency of the mixing body can be determined based on the ratio of measured flow rate of liquid transferred Qe and total calculated flow rate of N number of fins Qt.

(3-2-2) Example

As an example to determine the actual efficiency, a mixer body 21A having a cylindrical housing 31 with a diameter of about 50 mm is used.

The diameter of the mixer body 21A is measured and its actual measurement is expressed as follows:

$$D = 51 \text{ mm} \quad \dots (7)$$

The width and height of a fin or extruded portion of the mixer body is measured and the actual surface area of a fin is expressed as follows:

$$A = \text{width} \times \text{height} = 15 \text{ mm} \times 15 \text{ mm}$$

$$= 225 \text{ mm}^2 \quad \dots (8)$$

Based on the calculation above, the surface area of a fin is about 225 mm$^2$.

In this example, the actual number of fins (N) of the mixer body is expressed as follows:

$$N = 12 \quad \dots (9)$$

Based on the above, the mixer body used in this example includes 12 fins.

The mixer body 21A is set to operate at 1000 rpm. The frequency f expressed in the unit of revolution per second is expressed as follows:

$$f = 1000 \text{ rpm} / 60 = 16.7 \text{ rps} \quad \dots (10)$$

Thus, based on the calculation above, the frequency f is 16.7 rps.

Therefore, the velocity V of the cylindrical housing 31 of the mixer body 21A is expressed as follows:

$$V = \pi \, D \, f = 3.14 \times 51 \times 16.7$$

$$= 2674 \text{ mm/s} \qquad \ldots (11)$$

The velocity V of the cylindrical housing is 2674 mm/s.

With the above information, the volume flow rate Q of a single fin can be determined as follows:

$$Q = A \times V = 0.000225 \text{ m}^2 \times 2.67 \text{ m/s}$$

$$= 0.006 \text{ m}^3/\text{s} = 6 \text{ cm}^3/\text{s} \qquad \ldots (12)$$

Based on the above, the volume flow rate Q of a single fin is 6 cm$^3$/s.

The volume flow rate Q of 1 fin above may be expressed as follows:

$$6 \text{ cm}^3/\text{s} = 6 \text{ mL/s} \quad \ldots (13)$$

This means that a fin of the mixer body can transfer 6 mL of liquid per second. The flow rate of a fin may further be expressed in the unit of mL per minute (min) as follows:

$$6 \text{ mL/s} \times 60 = 360 \text{ mL/min} \quad \ldots (14)$$

Therefore, the amount of liquid to be mixed which is transferred by a total of 12 fins, where each fin's flow rate is 360 mL per minute, may now be determined.

The total volume flow rate of N number of fins Qt is expressed as follows:

$$Qt = 360 \text{ mL/min} \times 12 \text{ fins}$$

$$= 4320 \text{ mL/min} \qquad \ldots (15)$$

Furthermore, as is well known, 1 mL = 1 g. With this, the volume flow rate may be expressed in mass flow rate, where Qt = 4320 g/min.

Thus, based on the above, for every 4320 ml, theoretically 4320 g of liquid to be mixed is transferred by the fins of the mixer body per minute.

The actual measurement value Qe of a 50 mm diameter mixer body 21A under the rotational speed of 1,000 rpm is shown in the characteristic curve C1 as measurement point P2 in Fig. 7.

Based on the measurement point P2 recorded in Fig. 7, the measured Qe is as follows:

$$Qe = 3490 \text{ g/min} \quad \ldots (16)$$

Thus, the mixing efficiency may be calculated as follows:

$$E\% = \frac{Qe}{Qt} \times 100$$

$$= \frac{3490}{4320} \times 100$$

$$= 80.8\ \% \quad \ldots (17)$$

Accordingly, the actual efficiency of the mixer body is 80.8 %.

In this way, a mixing efficiency rate of 80.8% can be quantified and forecasted for a mixing device 21 having a mixer body 21A as configured in Figs. 2-4, where the cylindrical housing 31 having a 50 mm diameter and 12 fins being rotated at 1000 rpm.

(3-2-3) Confirming the mixing capacity based on mixing efficiency

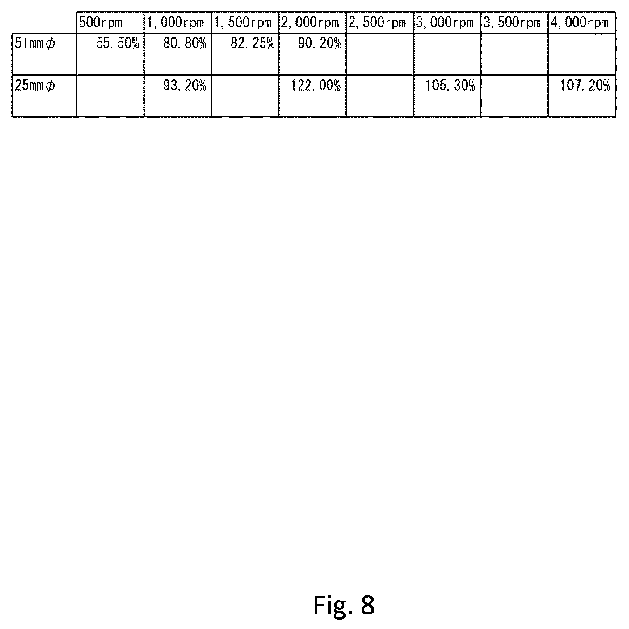

As indicated above, regarding the mixing device 21 having a configuration shown in Figs. 2-4, depending on the measured liquid transfer volume Qe of the liquid to mixed, the mixing capacity based on quantified data of the mixing efficiency can be understood. The experimental results of multiple mixing devices with different configurations are shown in Fig. 8.

According to Fig. 8, when a cylindrical housing 31 of a mixing device 21 having a diameter of 51 mm is rotated at 500 rpm, 1,000 rpm, 1,500 rpm and 2,000 rpm, the mixing efficiency rates of 55.50 %, 80.80 %, 82.25 % and 90.20 %, are respectively ascertained.

In addition, when a cylindrical housing 31 of a mixing device 21 having a diameter of 25 mm is rotated at 1,000 rpm, 2,000 rpm, 3,000 rpm and 4,000 rpm, the mixing efficiency rates of 93.20 %, 122.00 %, 105.30 % and 107.20 %, are respectively ascertained.

Referring to the experimental results which involve the cylindrical housing having a diameter of 25 mm and the cylindrical housing having a diameter of 50 mm, we have found that the mixing capacity of the former is extremely high. Particularly, the mixing efficiency rate exceeds 100 % at rpms of 2,000 and above. For example, the efficiency rate is 122% at 2,000 rpm, the efficiency rate is 105.30% at 3,000 rpm and the efficiency rate is 107.20% at 4,000 rpm.

If a mixing device 21 is designed and operated under these conditions, calculations based on the conditions above show that the measured liquid transfer volume Qe becomes larger than the theoretical total transferred liquid volume.

The mixing device 21 as configured in Figs. 2 - 4 creates an inner circulation flow f inside the cylindrical housing 31 that causes the liquid to be mixed to flow. The hollow space within the mixer body 21A does not obstruct this flow but instead creates a synergetic effect that causes the efficiency rate continues to have a high efficiency rate that surpasses 100%.

This phenomenon, for example, the inner circulation flow f generated, which may be referred to as a turbo effect, are due to the effects of the law of inertia. It can be said that this high mixing efficiency is due to the high utility of the mixing device configured and shown in Fig. 2 - Fig. 4.

(3-3) Suction Capacity

Regarding the experimental results conducted on the mixing device 21 of Figs. 2 - 4, we have found that an effective inner circulation flow f cannot be formed if the suction tube 32 formed at the bottom plate 21 G2 of the cylindrical housing 31 is not pipe-shaped (or cylindrical).

This is because, the suction tube 32 which is pipe-shaped enables laminar flow of the inner circulation flow f to be formed inside the cylindrical housing 31. At the time when the liquid to be mixed passes through the suction port of the suction tube 32 if the inner circulation flow f does not become a laminar flow, the mixing force of the mixer body 21A will not be formed.

The reason is that, if there is no laminar flow, a turbulent flow will be generated thus hampering the formation of inner circulation flow f.

(3-4) Measuring Lifting Force of the Mixer Device

Regarding the mixing performance conditions of the mixing device 21 in Figs. 2 - 4, it has been confirmed that the transfer capacity of the liquid to be mixed 21C in the mixing tank 21B is excellent.

In addition, the mixing capacity of mixer body 21A mixes the liquid to be mixed 21C at the lower end of the mixer body 21A. The suction flow e1, e2 and e3 results from the suction tube 32 attached to the bottom plate 21G2 of the cylindrical housing 31 enhances the mixing capacity.

(3-4-1) Suction Pressure

Regarding the mixing capacity measuring device 1 in Fig. 1, the capacity of the suction tube 10B corresponding to the suction tube 32 of the mixing device 21 in Figs. 2-4 is represented by the following equation.

Equation 18

$$PR / \sec = Qe/A_I \quad …(18)$$

Where

PR: Suction pressure ratio
$A_I$: Area of the suction inlet
Qe: Measured volume of liquid transferred.

It is important to measure the suction pressure ratio PR.

The suction pressure ratio PR is based on the ratio of the measured volume of liquid transferred Qe and the area of the suction inlet $A_I$ of the suction tube 32 of the mixing device 21. The suction pressure is compressed at the time the liquid to be mixed passes through the suction tube 32.

The volume of liquid transferred Qe of the mixer device 21 can be measured by performing the weighing procedure as described in paragraphs [0034] to [0041].

Through numerous experiments, not only the suction pressure ratio PR acts as one of the parameters showing the mixing capacity of the mixer device 21, it may also be used to determine the lifting force of the mixer device.

(3-4-2) Lifting Force Measurement

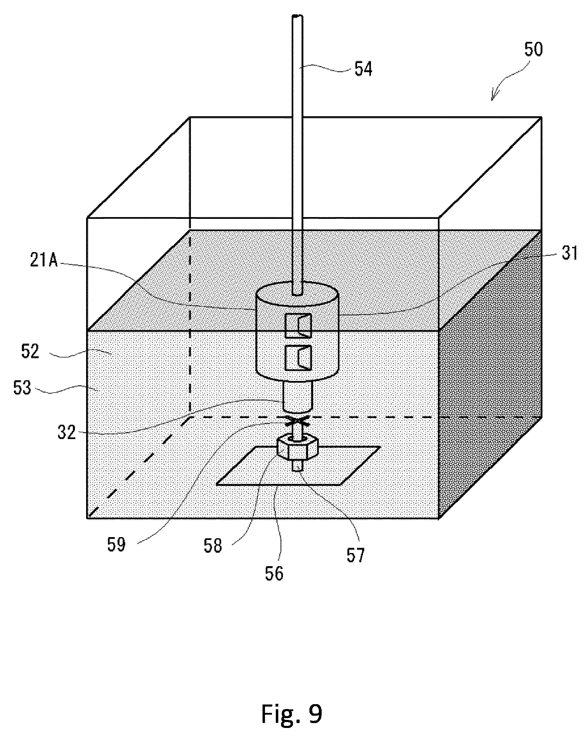

Fig. 9 shows an example setup of a measuring device 50. The measuring device 50 measures the lifting force which affects the mixing capacity of the mixing device 21.

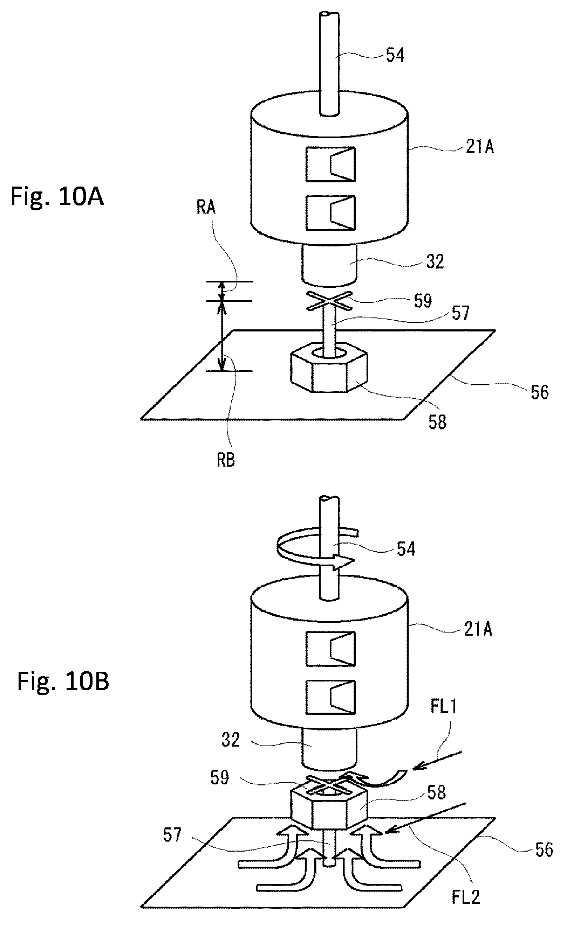

This lifting force measuring device 50 demonstrates that not only suction flow or force FL1 which is based on suction pressure generated near to or in the suction tube 32, but also the lifting flow or force FL2 which is created at the bottom position slightly away from the suction tube define the total lifting force of mixing flow movement of the mixer body as shown in Fig. 10B.

The lifting force of the mixing device can be measured by a small scale experiment setup using the lifting force measuring device 50. Referring to the measuring device shown in Fig. 9, the diameter of the cylindrical housing of the mixer main body is 50 mm. As shown in Fig. 10A, a reference height or distance RA of about 1 mm measured from the lower end of the suction tube 32 is defined for a suction flow FL1. On the other hand, a reference height or distance RB of about 20 mm to 30 mm which is disposed further away from the lower end of the suction tube is defined for a lifting flow FL2.

The lifting force measuring device 50 has a mixer body 21A that is rotatable by a rotation drive shaft 54 and is contained in the mixing tank 53 which stores liquid to be mixed 52. A support base 56 is formed at the bottom of the mixing tank 53.

The rotation drive shaft 54 extends downward along the central axis of the suction tube 32 towards the support base 56 having a guide-wire 57. A hollow stainless steel nut, which serves as a lift measurement weight 58, is provided and is inserted through the guide-wire so as to be able to move upward and downward.

A locking member 59 is provided at the upper end of the guide wire 57 so as to prevent the lift measurement weight 58 from being released. Thus, when the lift measurement weight 58 rises up to the locking member 59, it is due to the lifting flow FL2.

As shown in Fig. 9, when the mixer body 21 that is provided above the support base 56 of the mixing tank 53 is driven by the rotation drive shaft 54, an inner circulation flow f occurs inside the cylindrical housing 31 of the mixing body 21A. The inner circulation flow f which occurs in the vicinity of the suction port of the suction tube 32 draws the mixing liquid 52. The suction flow FL1, based on the suction pressure PR as presented in equation (18), causes liquid to be mixed to be sucked into the suction tube 32 (Fig. 10B). At the same time, along with the suction flow FL1, the liquid to be mixed 52 below is also sucked into the suction port by lifting flow FL2.

The lifting flow FL2 flows upward from the support base 56 at the bottom of the mixing tank 53. As a result, the lift measurement weight 58 is lifted upward until it reaches the locking member 59.

As described, the lift measurement weight 58 can be lifted upward by the lifting flow FL2. Thus, the lifting flow FL2 can be assessed taken into consideration the weight of the lift measurement weight 58.

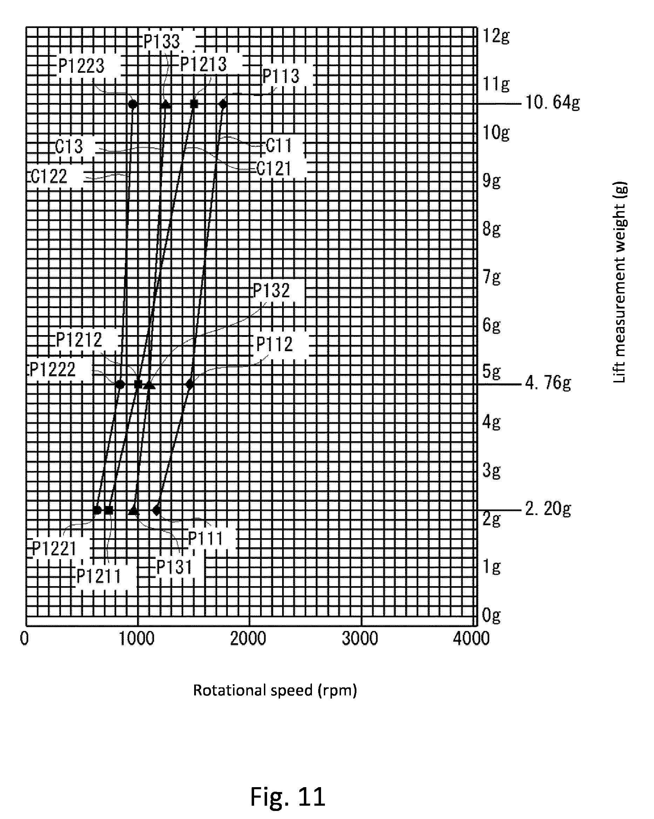

The lifting force is assessed taken into consideration the diameter the cylindrical housing 31 of the mixer body. The lift measurement weight 58 and the measured rotational speed (in rpm) of the mixer body 21A which lifts the lift measurement weight 58 to the locking member 59 are plotted in Fig. 11 as characteristic curves C11, C121 and C122, and C13.

Referring to Fig. 11, the horizontal axis represents the measured rotational speed (in rpm) of the mixer body 21A while the vertical axis represents the weight (in grams) of the lift measurement weight 58. For each preselected lift measurement weight 58, the rotational speed that is required to lift the lift measurement weight from the bottom of the mixing tank to the locking member is measured. The lift measurement weight and its corresponding required measured rotational speed are plotted as the characteristic curve measurement points P111, P112 and P113 in C11; P1211, P1212 and P1213 in C121; P1221, P1222 and P1223 in C122; and P131, P132 and P133 in C13.

The characteristic curves C11, C121, C122, C13, for example, are plotted based on the measured rotational speed (in rpm) required for the mixer body 21A to lift the lift measurement weights 58 of 2.20 g, 4.76 g, and 10.64 g from the bottom of the mixing tank to the locking member having the reference distance RB of 20 mm or 30 mm as shown in Fig. 10A.

Characteristic curve C11 is plotted when a cylindrical housing 31 of the mixer body 21A having a suction tube with a diameter of 10 mm is rotated for allotted time of 10 seconds. When a 2.20g lift measurement weight 58 rises to the reference height of 20 mm, measurement point P111 which indicates 1,170 rpm is obtained. Next, when a 4.76g lift measurement weight 58 rises to the reference height of 20 mm, measurement point P112 which indicates 1,470 rpm is obtained. Thereafter, when a 10.64g lift measurement weight 58 rises to the standard height of 20 mm, measurement point P113 which indicates 1,790 rpm is obtained.

In this way, the lifting characteristic of the cylindrical housing 31 of the mixer body 21A having a diameter of 10 mm can be quantified as represented by the measurement point results P111, P112, and P113 in characteristic curve C11.

Similarly, characteristic curves C121 and C122 are plotted when a cylindrical housing 31 of the mixer body 21A having a suction tube with a diameter of 23mm is rotated for allotted time of 10 seconds. Characteristic curve C121 shows the measurement results when a 2.20 g, 4.76 g and 10.64 g lift measurement weight 58 rises to the reference height of 30 mm, with measurement point P1211 with 710 rpm, P1212 with 1000 rpm and P1213 with 1500 rpm are respectively obtained. Characteristic curve C122 shows the measurement results when a 2.20 g, 4.76 g and 10.64 g lift measurement weight 58 rises to the reference height of 20 mm, with measurement point P1221 with 630 rpm, P1222 with 830 rpm and P1223 with 950 rpm are respectively obtained.

Characteristic curve C13 is plotted when a cylindrical housing 31 of the mixer body 21A having a suction tube with a diameter of 33 mm is rotated for allotted time of 10 seconds. Characteristic curve C13 shows the measurement results when a 2.20 g, 4.76 g and 10.64 g lift measurement weight 58 rises to the reference height of 20 mm, with measurement point P1311 with 980 rpm, P132 with 1120 rpm and P133 with 1,270 rpm are respectively obtained.

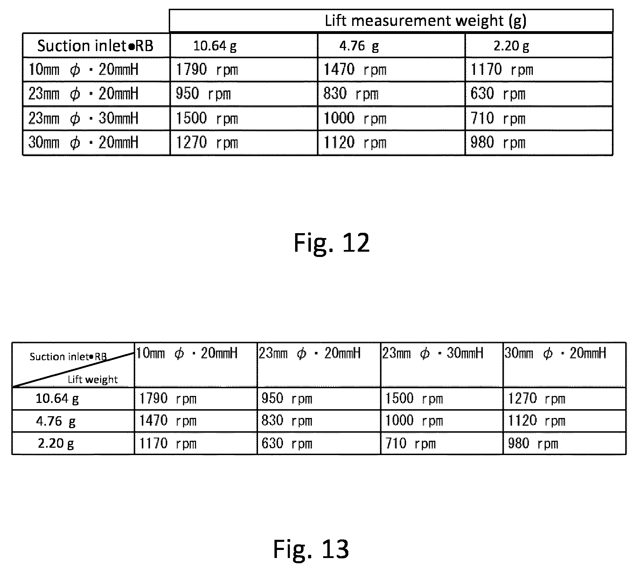

The relationship between lifting force and rpm presented in the characteristic curves shown in Fig. 11 is summarized in the table presented in Fig. 12. When the diameter of the suction tube 32 is 23 mm, relatively low rpm speeds of the mixer body 21A (950 rpm, 830 rpm and 630 rpm) are needed to lift the respective measurement weights 58 (10.64g, 4.76g and 2.20g) to the reference height of 20 mm.

In addition, it is observed that the mixer body 21A having a suction tube 32 with diameter of 23 mm, the rpm required to lift the measurement weight 58 to the reference height of 20 mm and 30 mm is less with the former than with the latter. Here, the reference height or distance between the bottom of the liquid mixing tank 53 and the suction tube 32 are just exemprary distances, it is understood that one can determine and numerically display the best mixing speed of the mixer body 21A based on any suitable reference height.

In this way, by measuring the lifting force of the mixer body 21A using the measuring device 50, the mixing capacity of the mixer body 21A from the standpoint of lift characteristic may be quantified.

(3-4-3) Relationship between lifting force and the diameter of the suction inlet

Based on the measurement results in Fig. 11, the table of Fig. 12 shows that when suction inlet diameters and reference heights are 10mm/20mm, 23mm/20mm, 23mm/30mm and 30mm/20mm and juxtaposed against the weights of the lift measuring weights 58 (10.64 g, 4.76 g and 2.20 g) and corrected for rpm, one notices that when the suction inlet diameter is closest to 23 mm, the require rotational speed (in rpm) is lower.

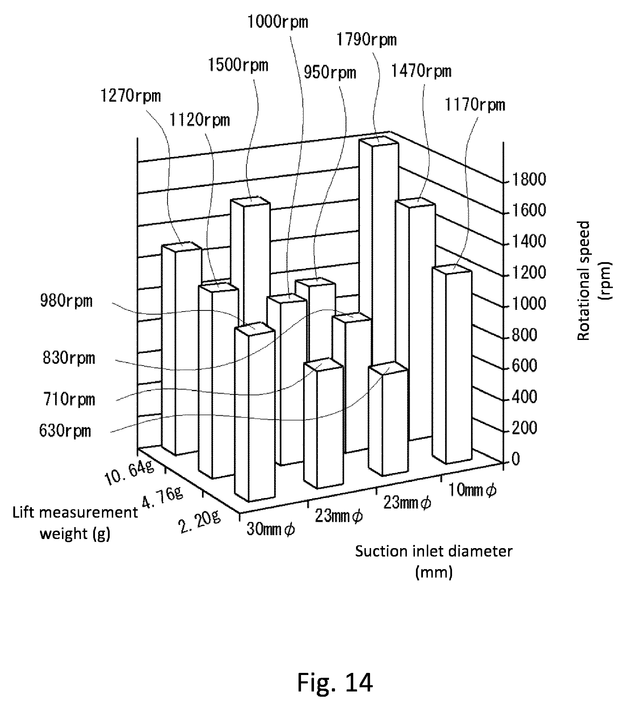

In addition, the results presented in the table of Fig. 12 may be rearranged in the manner as shown in the table of Fig. 13. With this, the weights of the lift measuring weights 58 (10.64 g, 4.76 g and 2.20 g) are plotted horizontally while the rotational speed being plotted vertically and then represented in a bar graph as shown in Fig. 14. As shown, the measured or required rpm is the lowest when the suction inlet diameter is 23 mm and the reference height is 20 mm.

Thus, regarding the diameter of the suction inlet of the mixing device, we have found that the highest mixing capacity is achieved when the diameter of the suction tube and the reference height is set at 23 mm/20 mm.

In this way, if mixing capacity can be quantified, then by appropriately selecting the graph display, the desired design condition characteristics can be easily understood.

(3-4-4) Relationship between mixing efficiency and the diameter of the cylindrical housing

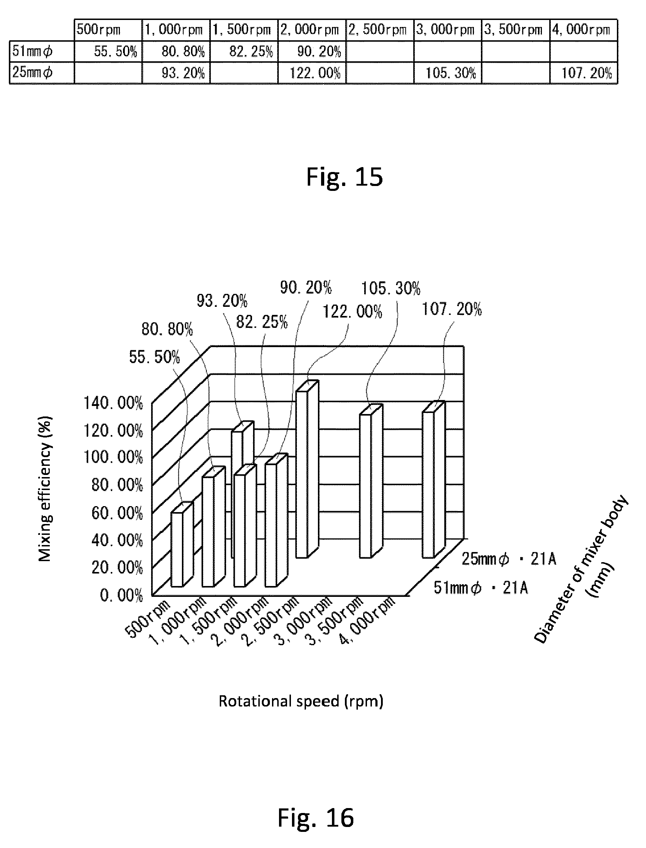

As shown in Fig. 15 and based on Equation (1), when the mixer body 21A has a cylindrical housing 31 with a diameter of 25 mm is rotated at 2,000 rpm, the mixing efficiency of 122% is observed.

Based on the measurement results for mixing efficiency, the question of which are the conditions of the mixing device which demonstrate the highest efficiency can be easily distinguished if the mixing efficiency of the measurement results are presented in a bar graph as shown in Fig. 16.

As shown in Fig. 16, when a mixer body 21A having cylindrical housing with a diameter of 25 mm is rotated at 1,000 rpm, 2,000 rpm, 3,000 rpm and 4,000 rpm, high mixing efficiency rates of 93.2%, 122%, 105.3% and 107.2%, are respectively shown in the bar graph. In addition, when a mixer body 21A having cylindrical housing with a diameter of 51mm is rotated at 500 rpm, 1,000 rpm, 1,500 rpm and 2,000 rpm, the efficiency rates of 55.5%, 80.8%, 82.25% and 92.2% are respectively shown in the bar graph.

By referring to Fig. 16, it is easily verified that the highest mixing efficiency is obtained by the mixer body 21A having a cylindrical housing 31 with a diameter of 25 mm.

(3-4-5) Measurement of the Transfer Volume Efficiency of the Suction Inlet

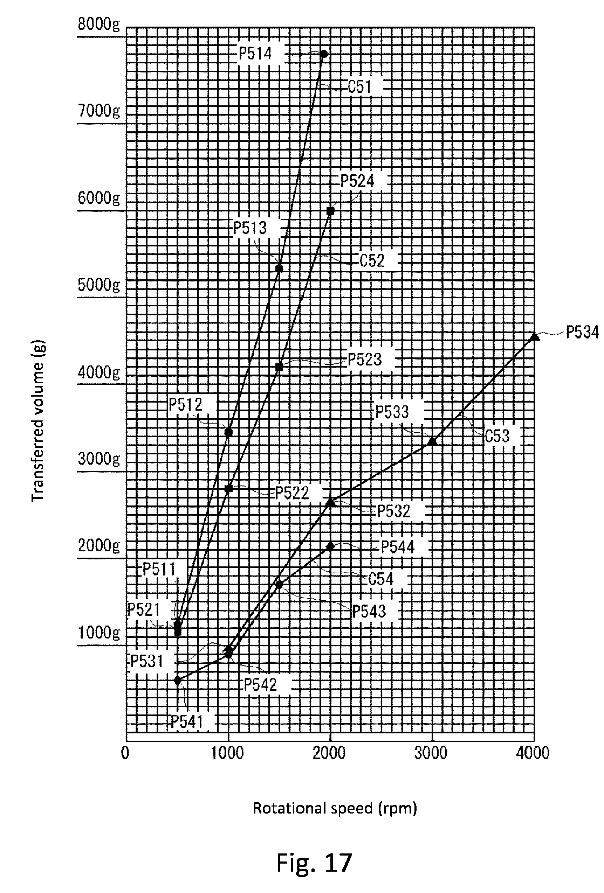

Based on the set up of the measuring procedure shown in Fig. 10A, the relationship between mixing transfer volume and lifting force can be determined. Fig. 17 shows the measured results and the relationship between the transfer volume of the liquid to be mixed and the diameter of the suction inlet of the suction tube 32.

Referring to Fig. 17, characteristic curve C51 shows the measured transfer volume of the liquid to be mixed in the case of a 50 mm diameter cylindrical housing 31 having a 23 mm diameter suction tube 32 as the mixer body 21A, being rotated at 500 rpm, 1,000 rpm, 1,500 rpm and 1,930rpm. At each rpm, the respective transfer volume is 1,200 g, 3,490 g, 5,330 g and 7,790 g. The measurement results are plotted as measurement points P511, P512, P513 and P514.

Characteristic curve C52 shows the measured transfer volume of the liquid to be mixed in the case of a 50mm diameter cylindrical housing 31 having a 30 mm diameter suction tube 32 as the mixer body 21A, being rotated at 500 rpm, 1,000 rpm, 1,500 rpm and 2,000 rpm. At each rpm, the respective transfer volume is 1,150 g, 2,800 g, 4,200 g and 6,000 g. The measurement results are plotted as measurement points P521, P522, P523 and P524.

Characteristic curve C53 shows the measured transfer volume of the liquid to be mixed in the case of a 25 mm diameter cylindrical housing 31 having a 25 mm diameter suction tube 32 as the mixer body 21A, being rotated at 1,000 rpm, 2,000 rpm, 3,000 rpm and 4,000 rpm. At each rpm, the respective transfer volume is 990 g, 2,680 g, 3,350 g and 4,500g. The measurement results are plotted as measurement points P531, P532, P533 and P534.

Characteristic curve C54 shows the measured transfer volume in the case of a 50mm diameter cylindrical housing 31 having a 10.5 mm diameter suction tube as the mixer body 21A, being rotated at 500 rpm, 1,000 rpm, 1,500 rpm, and 2,000 rpm. At each rpm, the respective transfer volume is 600 g, 950 g, 1,700 g and 2,150 g. The measurement results are plotted as measurement points P541, P542, P543 and P544.

According to the measurement data shown in Fig. 17, a mixer body 21A having a 50 mm diameter cylindrical housing 31 with a 23 mm diameter suction tube is forecasted to have the highest mixing efficiency.

3) Other embodiments

(4-1) According to the present disclosure, the mixing capacity measuring device is configured to measure mixing capacity of a mixer body of a mixing device that generates an inner circulation flow f.

Particularly, the mixing device exhibits high mixing efficiency that greatly contributes to energy saving.

(4-2) The mixing device of the present disclosure has a wide variety of uses. For example, it is especially effective for waste water regeneration treatment.

In other words, in order to regenerate polluted water containing large amounts of organic matter in sediment requires a process that uses aerobic bacteria and organic bacteria to decompose the organic matter.

Especially with aerobic bacteria, air is required to be mixed into the polluted water. By using the mixer device described above, devices such as an air compressor which consumes large amount of energy are not required. When the mixer body is rotated, a cyclonic flow is generated that automatically sucks air into the polluted water via holes formed in the upper portion of the mixer body. The live aerobic bacteria are thus thoroughly circulated throughout the polluted waste water.

In addition, when a mixer body having no holes in the upper portion is rotated air is not introduced into the liquid being mixed thus making for high mixing efficiency for anaerobic bacteria.

Conventionally, this continuous polluted water treatment required a large amount of energy. However, the mixing technology of the present disclosure has the advantage of using only a small amount of energy.

(4-3) In addition, pharmaceutical, chemical and food industries can use the mixer technology or mixing device as disclosed in the present disclosure to rationally design or scale up activities efficiently in a short period of time.

In short, such mixing can improve work efficiency and standardizing reproducibility so as to enhance product quality and reduce time.

INDUSTRIAL APPLICABILITY

The present disclosure relates to a mixing device that does not use an impeller type mixer member.

**Claims**

1. A mixing capacity measuring device that measures mixing capacity of a mixing device comprising:

a first mixing tank having a first mixing liquid;
the mixing device disposed in the first mixing tank, wherein the mixing device comprises a mixer body having

a cylindrical rotating member having a cylindrical housing, the mixer body is rotatable around a center axis line of the cylindrical housing via a rotating drive shaft connected to a top plate that encloses an upper end of the cylindrical housing, wherein
the cylindrical housing comprises a plurality of discharge ports formed in a peripheral surface of the cylindrical housing and a plurality of fins formed at an inner peripheral surface of the cylindrical housing so as to protrude inwardly, and
a suction port formed at a lower end of the cylindrical housing, wherein

when the cylindrical rotating member rotates, a portion of the first mixing liquid in the first mixing tank is sucked through the suction port; and
a measuring unit disposed in the first mixing tank, wherein the measuring unit is configured to determine the mixing capacity of the mixing device.

2. The mixing capacity measuring device of claim 1 comprising:

a measurement control unit coupled to the mixing device, wherein the measurement control unit is configured to activate a drive motor to rotate the mixer body of the mixing device at a rotational speed defined by a user.

3. The mixing capacity measuring device of claim 1 wherein:

the measuring unit comprises a second mixing tank disposed over and within the first mixing tank;
the mixing device is disposed within the second mixing tank; and
the suction port is arranged to pass through a bottom surface of the second mixing tank so as to be in communication with the first tank, wherein
when the cylindrical rotating member rotates, the portion of the first mixing liquid in the first mixing tank is sucked through the suction port so as to be transferred into the second mixing tank as a second mixing liquid, wherein the amount of the second mixing liquid transferred from the first mixing tank into the second mixing tank determines the mixing capacity of the mixing device.

4. The mixing capacity measuring device of claim 1 wherein:

the measurement unit comprises a guide wire disposed below the suction port and is attached to a bottom of the first mixing tank, wherein the guide wire comprises a locking member disposed at upper end of the guide wire and a lift measurement weight having a first weight inserted through the guide wire so as to be able to move upward and downward, and wherein

when the cylindrical rotating member rotates, the required rotational speed to lift the lift measurement weight from the bottom of the first mixing tank to the locking member which relates to a lifting force determines the mixing capacity of the mixer body.

5. A method of measuring a mixing capacity of a mixing device comprising:

providing a first mixing tank having a first mixing liquid;
providing the mixing device in the second mixing tank, wherein the mixing device comprises a mixer body having

a cylindrical rotating member having a cylindrical housing with a first diameter, the mixer body is rotatable around a center axis line of the cylindrical housing via a rotating drive shaft connected to a top plate that encloses an upper end of the cylindrical housing, wherein
the cylindrical housing comprises a plurality of discharge ports formed in a peripheral surface of the cylindrical housing and a plurality of fins formed at an inner peripheral surface of the cylindrical housing so as to protrude inwardly, and
a suction port having a first diameter formed at a lower end of the cylindrical housing, wherein
when the cylindrical rotating member rotates, a portion of the first mixing liquid in the first mixing tank is sucked through the suction port; and

providing a measuring unit in the first mixing tank, wherein the measuring unit is configured to determine the mixing capacity of the mixing device.

6. The method of claim 5 comprising:

coupling a measurement control unit to the mixing device, wherein the measurement control unit is configured to activate a drive motor to rotate the mixer body of the mixing device at a rotational speed defined by a user.

7. The method of claim 6 wherein providing the measuring unit comprises:

providing a second mixing tank over and within the first mixing tank, wherein the mixing device is placed within the second mixing tank and the suction port is arranged to pass through a bottom surface of the second mixing tank so as to be in communication with the first tank.

8. The method of claim 7 comprising:

indicating a first marking of an initial water level on a surface of the second mixing tank;
activating the cylindrical rotating member to rotate at the rotational speed defined by the user, wherein the portion of the first mixing liquid in the first mixing tank is sucked through the suction port so as to be transferred into the second mixing tank as a second mixing liquid having a final water level in the second mixing tank;
indicating a second marking of the final water level on the surface of the second mixing tank, and
measuring the amount of the second mixing liquid transferred from the first mixing tank into the second mixing tank which determines the mixing capacity of the mixing device.

9. The method of claim 8 wherein measuring the amount of the second mixing liquid comprises:

providing a weighing device;
placing the second mixing tank having the first and second markings on the weighing device;
measuring the weight of the second mixing tank and recording the weight of the second mixing tank as a first weight W1 as appeared on the weighing device;
pouring a liquid into the second mixing tank until the liquid reaches the first marking and recording the weight of the liquid that reaches the first marking as a second weight W2 as appeared on the weighing device;
continue pouring the liquid into the second mixing tank until the liquid reaches the second marking and recording the weight of the liquid that reaches the second marking as a third weight W3; and
determing the difference between W3 and W2, wherein the difference corresponds to the actual measured amount (Qe) of the second mixing liquid transferred from the first mixing tank into the second mixing tank at the rotational speed defined by the user.

10. The method of claim 9 comprising:

calculating total amount (Qt) of second mixing liquid transferred from the first mixing tank into the second mixing tank at the rotational speed defined by the user based on surface area of the fin, number of fins, frequency and first diameter of the mixer body; and
determining efficiency of the mixing device based on the ratio of measured Qe and calculated Qt.

11. The method of claim 9 comprising:

determining a suction pressure ratio of the suction port which affects mixing capacity of the mixing device, wherein the suction pressure ratio is determined based on ratio of the measured Qe and area of the suction port.

12. The method of claim 6 wherein providing the measurement unit comprises:

providing a guide wire below the suction port, wherein the guide wire has a bottom end attached to a bottom of the first mixing tank and comprises a locking member disposed at an upper end of the guide wire, wherein the bottom end and the upper end of the guide wire defines a distance RB; and
providing a lift measurement weight having a first weight and inserting the lift measurement weight through the guide wire so as to be able to move upward and downward.

13. The method of claim 12 comprising:

activating the cylindrical rotating member; and
varying the rotational speed of the cylindrical rotating member; and
determining and recording the rotational speed required to lift the lift measurement weight having the first weight from the bottom end of the guide wire to the locking member, wherein the required rotational speed relates to a lifting force that determines the mixing capacity of the mixer body.

14. A method for configuring a mixing device comprising:

providing a mixer body having

a cylindrical rotating member having a cylindrical housing, the mixer body is rotatable around a center axis line of the cylindrical housing via a rotating drive shaft connected to a top plate that encloses an upper end of the cylindrical housing, wherein
the cylindrical housing comprises a plurality of discharge ports formed in a peripheral surface of the cylindrical housing and a plurality of fins formed at an inner peripheral surface of the cylindrical housing so as to protrude inwardly, and
a suction port having a first diameter formed at a lower end of the cylindrical housing; and

configuring design parameters of various components of the mixer body based on a desired efficiency of the mixing device defined by a user.

15. The method of claim 14 wherein the design parameters of the various components of the mixer body comprise diameter of the cylindrical housing, diameter of the suction port and number of fins.

16. The method of claim 15 wherein the diameter of the cylindrical housing is configured by:

performing a mixing capacity measuring process to measure actual amount (Qe) of liquid transferred by various cylindrical housing diameters;
calculating total theoretical amount (Qt) of liquid transferred by various cylindrical housing diameters;
determining efficiency based on the ratio of measured Qe and calculated Qt for each cylindrical housing diameter; and
selecting a diameter of the cylindrical housing that best matches the desired efficiency as defined by the user.

**17.** The method of claim 15 wherein the diameter of the suction port is configured by:

performing a lifting force measuring process to measure lifting force of various suction port diameters; and selecting a diameter of the suction port that best matches the desired efficiency as defined by the user.

**18.** A mixing device comprising:

a mixer body having

a cylindrical rotating member having a cylindrical housing, the mixer body is rotatable around a center axis line of the cylindrical housing via a rotating drive shaft connected to a top plate that encloses an upper end of the cylindrical housing, wherein
the cylindrical housing comprises a plurality of discharge ports formed in a peripheral surface of the cylindrical housing and a plurality of fins formed at an inner peripheral surface of the cylindrical housing so as to protrude inwardly, and
a suction port having a first diameter formed at a lower end of the cylindrical housing, wherein

design parameters of various components of the mixer body are based on a desired efficiency of the mixing device defined by a user.

**19.** The mixing device of claim 18 wherein the design parameters of the various components of the mixer body comprise diameter of the cylindrical housing, diameter of the suction port and number of fins.

Fig. 1

Fig. 2

Fig. 3

Fig. 4

Fig. 5a

Fig. 5b

Fig. 5c

Fig. 6a

Fig. 6b

Fig. 6c

Fig. 7

| | 500rpm | 1,000rpm | 1,500rpm | 2,000rpm | 2,500rpm | 3,000rpm | 3,500rpm | 4,000rpm |
|---|---|---|---|---|---|---|---|---|
| 51mm$\phi$ | 55.50% | 80.80% | 82.25% | 90.20% | | | | |
| 25mm$\phi$ | | 93.20% | | 122.00% | | 105.30% | | 107.20% |

Fig. 8

Fig. 9

Fig. 10A

RA

RB

54

21A

32

59

57

56

58

Fig. 10B

54

21A

32

FL1

59

58

57

56

FL2

Fig. 11

| Suction inlet•RB | Lift measurement weight (g) | | |
|---|---|---|---|
| | 10.64 g | 4.76 g | 2.20 g |
| 10mm $\phi$ · 20mmH | 1790 rpm | 1470 rpm | 1170 rpm |
| 23mm $\phi$ · 20mmH | 950 rpm | 830 rpm | 630 rpm |
| 23mm $\phi$ · 30mmH | 1500 rpm | 1000 rpm | 710 rpm |
| 30mm $\phi$ · 20mmH | 1270 rpm | 1120 rpm | 980 rpm |

Fig. 12

| Suction inlet•RB / Lift weight | 10mm $\phi$ · 20mmH | 23mm $\phi$ · 20mmH | 23mm $\phi$ · 30mmH | 30mm $\phi$ · 20mmH |
|---|---|---|---|---|
| 10.64 g | 1790 rpm | 950 rpm | 1500 rpm | 1270 rpm |
| 4.76 g | 1470 rpm | 830 rpm | 1000 rpm | 1120 rpm |
| 2.20 g | 1170 rpm | 630 rpm | 710 rpm | 980 rpm |

Fig. 13

Fig. 14

| | 500rpm | 1,000rpm | 1,500rpm | 2,000rpm | 2,500rpm | 3,000rpm | 3,500rpm | 4,000rpm |
|---|---|---|---|---|---|---|---|---|
| 51mmφ | 55.50% | 80.80% | 82.25% | 90.20% | | | | |
| 25mmφ | | 93.20% | | 122.00% | | 105.30% | | 107.20% |

Fig. 15

Fig. 16

Fig. 17

Europäisches
Patentamt

European
Patent Office

Office européen
des brevets

## EUROPEAN SEARCH REPORT

Application Number

EP 16 16 2331

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 749 348 A1 (UNIFLEX CO LTD [JP]) 2 July 2014 (2014-07-02) | 14-19 | INV. B01F7/00 |
| Y | * paragraph [0004] * <br> * paragraphs [0011] - [0016] * <br> * paragraph [0026] * <br> * figures 2,3 * | 1-13 | B01F7/28 <br> G01F9/00 |
| Y | DE 35 26 834 A1 (MGVG MEDIZINISCHE GERAETE VERT [DE]) 29 January 1987 (1987-01-29) <br> * column 2, lines 36-65 * <br> * column 3, line 58 - column 4, line 12 * <br> * figure 1 * | 1-3,5-11 | |
| A | EP 1 286 240 A1 (VOGEL PUMPEN [AT]) 26 February 2003 (2003-02-26) <br> * paragraph [0001] * <br> * paragraph [0004] * <br> * paragraphs [0018], [0019], [0021] * <br> * figure 2 * | 1-19 | |
| Y | US 2 196 285 A (BACHLE CARL F) 9 April 1940 (1940-04-09) <br> * column 1, lines 15-27 * <br> * figure 1 * | 4,12,13 | TECHNICAL FIELDS SEARCHED (IPC) <br><br> B01F <br> G01F <br> F04D |

The present search report has been drawn up for all claims

| Place of search | Date of completion of the search | Examiner |
|---|---|---|
| The Hague | 5 September 2016 | Posten, Katharina |

EPO FORM 1503 03.82 (P04C01)

## ANNEX TO THE EUROPEAN SEARCH REPORT
## ON EUROPEAN PATENT APPLICATION NO.

EP 16 16 2331

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2016

| Patent document cited in search report | | Publication date | Patent family member(s) | | Publication date |
|---|---|---|---|---|---|
| EP 2749348 | A1 | 02-07-2014 | EP | 2749348 A1 | 02-07-2014 |
| | | | JP | 2014124540 A | 07-07-2014 |
| | | | KR | 20140082940 A | 03-07-2014 |
| | | | US | 2014177379 A1 | 26-06-2014 |
| DE 3526834 | A1 | 29-01-1987 | NONE | | |
| EP 1286240 | A1 | 26-02-2003 | AT | 273533 T | 15-08-2004 |
| | | | CA | 2396634 A1 | 22-02-2003 |
| | | | DE | 50103236 D1 | 16-09-2004 |
| | | | DK | 1286240 T3 | 13-12-2004 |
| | | | EP | 1286240 A1 | 26-02-2003 |
| | | | ES | 2227112 T3 | 01-04-2005 |
| | | | US | 2003039556 A1 | 27-02-2003 |
| US 2196285 | A | 09-04-1940 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2015066522 A
- US 07794316 A
- US 13815713 A
- JP 2012280988 A
- JP 2014124540 A